# EUROPEAN PATENT APPLICATION

(11) **EP 2 755 447 A1**
(43) Date of publication of application: **16.07.2014**
(21) Application number: 13159452.5
(22) Date of filing: 15.03.2013
(51) Int. Cl.: H05B 33/08

(54) **Power supply circuit and luminaire**

(30) Priority: 07.12.2012 JP 2012268840
(71) Applicant: Toshiba Lighting & Technology Corporation, Yokosuka-shi Kanagawa 237-8510 (JP)
(72) Inventor: Kato, Go, Kanagawa 237-8510 (JP); Nakamura, Hiroto, Kanagawa 237-8510 (JP); Takahashi, Koji, Kanagawa 237-8510 (JP); Kudo, Hiroyuki, Kanagawa 237-8510 (JP); Otake, Hirokazu, Kanagawa 237-8510 (JP); Kitamura, Noriyuki, Kanagawa 237-8510 (JP)
(74) Representative: Bokinge, Ole

(57) **Abstract**

There is provided a power supply circuit (14) including a power converting unit (20) configured to convert a conduction angle controlled alternating-current voltage supplied via a power supply path (25) and supply a direct-current voltage to a load (12), a control unit (21) configured to detect a conduction angle of the alternating-current voltage and control the conversion of the voltage according to the detected conduction angle, and a power supply unit for control (22) including a first branch path (40) electrically connected to the power supply path (25), a semiconductor element (51) configured to adjust an electric current flowing to the first branch path (40), a thermosensor (52, 55) configured to limit, if the temperature of the semiconductor element (51) is equal to or higher than an upper limit temperature, an electric current flowing to the semiconductor element (51). The power supply unit for control (22) converts the alternating-current voltage input via the first branch path (40) and supplies a direct-current voltage to the control unit (21).

## Description

### FIELD

Embodiments described herein relate generally to a power supply circuit and a luminaire.

### BACKGROUND

There is a power supply circuit that converts a conduction angle controlled alternating-current voltage to a predetermined voltage and supplies the voltage to a load. Such a power supply circuit is used for a luminaire provided with a lighting load including an illumination light source such as a light-emitting diode (LED). The power supply circuit for lighting supplies electric power to the lighting load and performs the conversion of the voltage in synchronization with the conduction angle control by a dimmer to thereby perform dimming of the illumination light source. The power supply circuit includes a control unit configured to detect a conduction angle of the alternating-current voltage and control conversion of the voltage according to the detected conduction angle and a power supply unit for control configured to supply electric power to the control unit. In such a power supply circuit, there is a demand for suppressing heat generation of components included in the power supply unit for control.

### BRIEF DESCRIPTION OF THE DRAWINGS

FIG. 1 is a block diagram schematically showing a luminaire according to a first embodiment;
FIG. 2 is a circuit diagram schematically showing a power supply circuit according to the first embodiment;
FIGS. 3A and 3B are graphs showing the operation of a control unit according to the first embodiment;
FIG. 4A to 4C are graphs showing the operation of the control unit according to the first embodiment;
FIGS. 5A to 5C are graphs showing the operation of the control unit according to the first embodiment;
FIG. 6 is a circuit diagram schematically showing another power supply circuit according to the first embodiment;
FIG. 7 is a circuit diagram schematically showing a power supply circuit according to a second embodiment;
FIG. 8 is a circuit diagram schematically showing another power supply circuit according to the second embodiment;
FIG. 9 is a circuit diagram schematically showing a power supply circuit according to a third embodiment; and
FIG. 10 is a circuit diagram schematically showing another power supply circuit according to the third embodiment.

### DETAILED DESCRIPTION

In general, according to one embodiment, there is provided a power supply circuit including a power converting unit, a control unit, and a power supply unit for control. The power converting unit converts a conduction angle controlled alternating-current voltage supplied via a power supply path and supplies a direct-current voltage to a load. The control unit detects a conduction angle of the alternating-current voltage and controls the conversion of the voltage by the power converting unit according to the detected conduction angle. The power supply unit for control includes a first branch path, a semiconductor element, and a thermosensor. The first branch path is electrically connected to the power supply path. The semiconductor element adjusts an electric current flowing to the first branch path. The thermosensor limits, if the temperature of the semiconductor element is equal to or higher than an upper limit temperature, an electric current flowing to the semiconductor element. The power supply unit for control converts the alternating-current voltage input via the first branch path and supplies a direct-current voltage to the control unit.

According to another embodiment, there is provided a luminaire including a lighting load and a power supply circuit. The lighting load includes an illumination light source. The power supply circuit includes a power converting unit, a control unit, and a power supply unit for control. The power converting unit converts a conduction angle controlled alternating-current voltage supplied via a power supply path and supplies a direct-current voltage to the lighting load. The control unit detects a conduction angle of the alternating-current voltage and controls the conversion of the voltage by the power converting unit according to the detected conduction angle. The power supply unit for control includes a first branch path, a semiconductor element, and a thermosensor. The first branch path is electrically connected to the power supply path. The semiconductor element adjusts an electric current flowing to the first branch path. The thermosensor limits, if the temperature of the semiconductor element is equal to or higher than an upper limit temperature, an electric current flowing to the semiconductor element. The power supply unit for control converts the alternating-current voltage input via the first branch path and supplies a direct-current voltage to the control unit.

Embodiments are explained below with reference to the accompanying drawings.

The drawings are schematic or conceptual. A relation between the thicknesses and the widths of portions, ratios of the sizes of the portions, and the like are not always the same as real ones. Further, even if the same portions are shown, the portions are shown at different dimensions and ratios depending on the drawings.

In this specification and the drawings, components same as components already explained with reference to the drawings already referred to are denoted by the same reference numerals and signs and detailed explanation of the components is omitted.

### First Embodiment

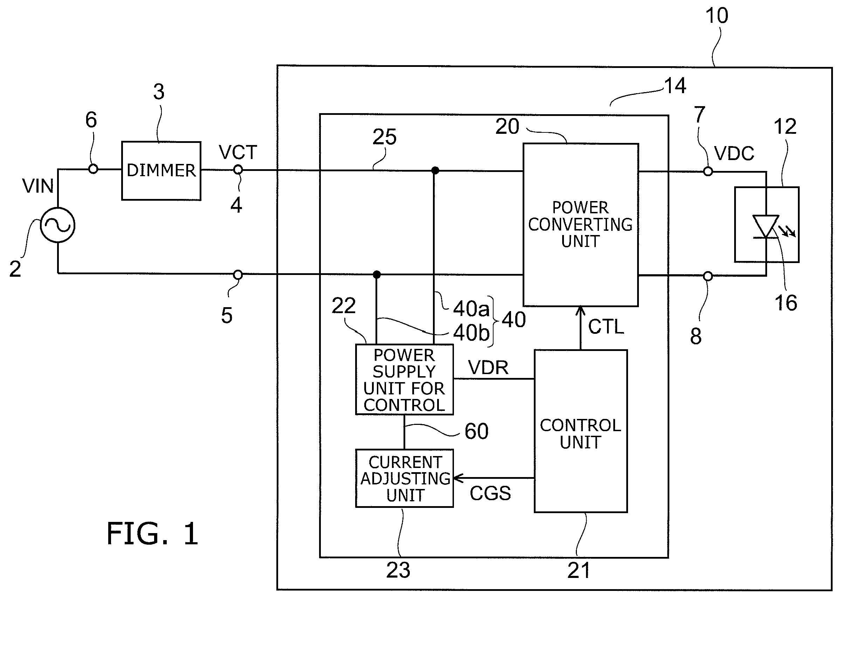

FIG. 1 is a block diagram schematically showing a luminaire according to a first embodiment.

As shown in FIG. 1, a luminaire 10 includes a lighting load 12 (a load) and a power supply circuit 14. The lighting load 12 includes an illumination light source 16 such as a light-emitting diode (LED). The power supply circuit 14 is connected to an alternating-current power supply 2 and a dimmer 3. In this specification, "connection" means electrical connection and includes non-physical connection and connection performed via another element.

The alternating-current power supply 2 is, for example, a commercial power supply. The dimmer 3 generates a conduction angle controlled alternating-current voltage VCT from a power supply voltage VIN of the alternating-current power supply 2. The power supply circuit 14 converts the alternating-current voltage VCT supplied from the dimmer 3 into a direct-current voltage VDC and outputs the direct-current voltage VDC to the lighting load 12 to thereby light the illumination light source 16. The power supply circuit 14 performs dimming of the illumination light source 16 in synchronization with the conduction angle controlled alternating-current voltage VCT.

As the conduction angle control by the dimmer 3, there are, for example, a system of phase control (leading edge) for controlling a phase conducting in a period from a zero-cross of an alternating-current voltage to time when an absolute value of the alternating-current voltage reaches a maximum value and a system of anti-phase control (trailing edge) for controlling a phase interrupted in a period from the time when the absolute value of the alternating-current voltage reaches the maximum value to the zero-cross of the alternating-current voltage.

The dimmer 3 that performs phase control has a simple circuit configuration and can treat a relatively large power load. However, if a triac is used, a light load operation is difficult. Therefore, the dimmer 3 tends to fall into an unstable operation if a so-called power supply dip in which a power supply voltage temporarily drops occurs. If a capacitive load is connected to the dimmer 3, since a rush current occurs, for the dimmer 3 is incompatible with the capacitive load.

On the other hand, the dimmer 3 that performs anti-phase control can operate even with a light load. Even if the capacitive load is connected to the dimmer 3, a rush current does not occur. Even if a power supply dip is generated, the operation of the dimmer 3 is stable. However, since a circuit configuration is complicated and temperature tends to rise, the dimmer 3 is not suitable for a heavy load. If an inductive load is connected to the dimmer 3, for example, a surge occurs.

In a configuration explained in this embodiment, the dimmer 3 is inserted in series between terminals 4 and 6 of one of a pair of power supply lines that supply the power supply voltage VIN. However, other configurations may be adopted.

The power supply circuit 14 includes a power converting unit 20, a control unit 21, a power supply unit for control 22, and a current adjusting unit 23. The power converting unit 20 converts the alternating-current voltage VCT, which is supplied via the power supply path 25, into the direct-current voltage VDC having a predetermined voltage value corresponding to the lighting load 12 and supplies the direct-current voltage VDC to the lighting load 12.

The power supply unit for control 22 includes a first branch path 40 connected to the power supply path 25. The first branch path 40 includes a wire 40a connected to the input terminal 4 and a wire 40b connected to an input terminal 5. The power supply unit for control 22 converts the alternating-current voltage VCT, which is input via the first branch path 40, into a direct-current driving voltage VDR corresponding to the control unit 21 and supplies the driving voltage VDR to the control unit 21.

The current adjusting unit 23 includes a second branch path 60 electrically connected to the power supply unit for control 22. The current adjusting unit 23 can switch a conduction state in which a part of an electric current flowing to the first branch path 40 is fed to the second branch path 60 and a non-conduction state in which a part of the electric current is not fed to the second branch path 60. Consequently, the current adjusting unit 23 adjusts, for example, an electric current flowing to the power supply path 25. The non-conduction state includes a state in which a feeble current not affecting an operation flows to the second branch path 60. The non-conduction state is a state in which an electric current flowing to the second branch path 60 is smaller than the current in the conduction state.

The control unit 21 detects a conduction angle of the alternating-current voltage VCT. The control unit 21 generates a control signal CTL corresponding to the detected conduction angle and inputs the control signal CTL to the power converting unit 20. The power converting unit 20 generates the direct-current voltage VDC having a voltage value corresponding to the input control signal CTL. That is, the control unit 21 controls conversion into the direct-current voltage VDC by the power converting unit 20. The control unit 21 generates a control signal CGS according to the detected conduction angle and inputs the control signal CGS to the current adjusting unit 23 to thereby control the switching between the conduction state and the non-conduction state of the current adjusting unit 23. In this way, the control unit 21 controls the power converting unit 20 and the current adjusting unit 23 according to the detected conduction angle to thereby dim the illumination light source 16 in synchronization with the conduction angle control by the dimmer 3. For example, a microprocessor is used as the control unit 21.

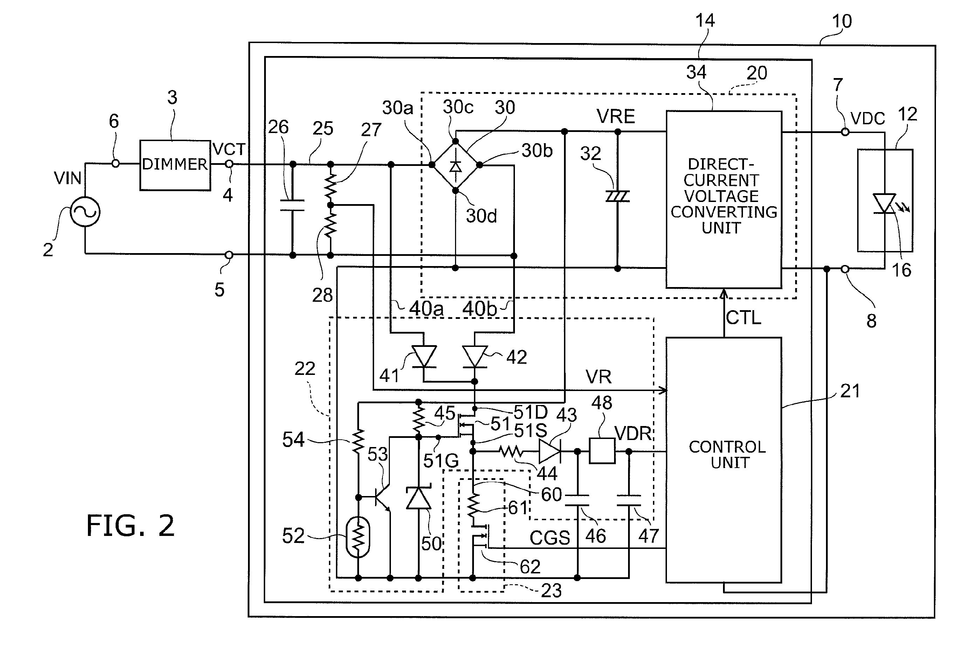

FIG. 2 is a circuit diagram schematically showing the power supply circuit according to the first embodiment.

As shown in FIG. 2, the power converting unit 20 includes a rectifying circuit 30, a smoothing capacitor 32, and a direct-current voltage converting unit 34.

The rectifying circuit 30 is configured by, for example, a diode bridge. A pair of input terminals 30a and 30b of the rectifying circuit 30 is connected to a pair of input terminals 4 and 5. A phase-controlled or anti-phase controlled alternating-current voltage VCT is input to the input terminals 30a and 30b of the rectifying circuit 30 via the dimmer 3. For example, the rectifying circuit 30 full-wave rectifies the alternating-current voltage VCT and causes a full-wave rectified pulsating voltage between a high-potential terminal 30c and a low-potential terminal 30d.

The smoothing capacitor 32 is connected between the high-potential terminal 30c and the low-potential terminal 30d of the rectifying circuit 30. The smoothing capacitor 32 smoothes the pulsating voltage rectified by the rectifying circuit 30. Consequently, a direct-current voltage VRE (a first direct-current voltage) appears at both the ends of the smoothing capacitor 32.

The direct-current voltage converting unit 34 is connected to both the ends of the smoothing capacitor 32. Consequently, the direct-current voltage VRE is input to the direct-current voltage converting unit 34. The direct-current voltage converting unit 34 converts the direct-current voltage VRE into a direct-current voltage VDC (a second direct-current voltage) having a different voltage value and outputs the direct-current voltage VDC to output terminals 7 and 8 of the power supply circuit 14. The lighting load 12 is connected to the output terminals 7 and 8. The lighting load 12 lights the illumination light source 16 with the direct-current voltage VDC supplied from the power supply circuit 14.

The direct-current voltage converting unit 34 is connected to the control unit 21. The control unit 21 inputs a control signal CTL to the direct-current voltage converting unit 34. For example, the direct-current voltage converting unit 34 steps down the direct-current voltage VRE according to the control signal CTL. Consequently, for example, the direct-current voltage converting unit 34 converts the direct-current voltage VRE into the direct-current voltage VDC corresponding to the specifications of the lighting load 12 and a dimming degree of the dimmer 3.

The direct-current voltage converting unit 34 includes a switching element such as an FET. The direct-current voltage converting unit 34 steps down the direct-current voltage VRE by turning on and off the switching element. For example, the control unit 21 inputs, as the control signal CTL, a duty signal for specifying on and off timings of the switching element to the direct-current voltage converting unit 34. Consequently, it is possible to adjust a voltage value of the direct-current voltage VDC to a value corresponding to a duty ratio of the control signal CTL. The direct-current voltage converting unit 34 is, for example, a DC-DC converter of a falling voltage type.

The power supply circuit 14 further includes a filter capacitor 26 and resistors 27 and 28. The filter capacitor 26 is connected between the input terminals 4 and 5. That is, the filter capacitor 26 is connected to the power supply path 25. For example, the filter capacitor 26 removes noise included in the alternating-current voltage VCT.

The resistors 27 and 28 are connected in series between the input terminals 4 and 5. A connection point of the resistors 27 and 28 is connected to the control unit 21. Consequently, a voltage corresponding to a voltage division ratio of the resistors 27 and 28 is input to the control unit 21 as a detection voltage VR for detecting an absolute value of the alternating-current voltage VCT.

The power supply unit for control 22 includes rectifying elements 41 to 43, resistors 44 and 45, capacitors 46 and 47, a regulator 48, a Zener diode 50, and a semiconductor element 51.

The rectifying elements 41 and 42 are, for example, diodes. An anode of the rectifying element 41 is connected to one input terminal 30a of the rectifying circuit 30 via a wire 40a. An anode of the rectifying element 42 is connected to the other input terminal 30b of the rectifying circuit 30 via a wire 40b.

As the semiconductor element 51, for example, an FET or a GaN-HEMT is used. In the following explanation, the semiconductor element 51 is explained as an FET 51. In this example, the FET 51 is an n-channel FET of an enhancement type. The FET 51 includes a source electrode 51S (a first main electrode), a drain electrode 51D (a second main electrode), and a gate electrode 51G (a control electrode). The potential of the drain electrode 51D is set higher than the potential of the source electrode 51S. The gate electrode 51G is used to switch a first state in which an electric current flows between the source electrode 51S and the drain electrode 51D and a second state in which an electric current flowing between the source electrode 51S and the drain electrode 51D is smaller than the electric current in the first state. In the second state, an electric current does not substantially flow between the source electrode 51S and the drain electrode 51D.

The drain electrode 51D of the FET 51 is connected to a cathode of the rectifying element 41 and a cathode of the rectifying element 42. That is, the drain electrode 51D of the FET 51 is connected to the power supply path 25 via the rectifying elements 41 and 42. The source electrode 51S of the FET 51 is connected to one end of the resistor 44. The gate electrode 51G of the FET 51 is connected to a cathode of the Zener diode 50. Further, the gate electrode 51G of the FET 51 is connected to the high-potential terminal 30c, which is an output terminal on a high-potential side of the rectifying circuit 30, via the resistor 45.

The other end of the resistor 44 is connected to an anode of the rectifying element 43. A cathode of the rectifying element 43 is connected to one end of the capacitor 46 and one end of the regulator 48. The other end of the regulator 48 is connected to the control unit 21 and one end of the capacitor 47.

An electric current having one polarity involved in the application of the alternating-current voltage VCT flows to the drain electrode 51D of the FET 51 via the rectifying element 41. On the other hand, an electric current having the other polarity involved in the application of the alternating-current voltage VCT flows to the drain electrode 51D of the FET 51 via the rectifying element 42. Consequently, a pulsating voltage obtained by full-wave rectifying the alternating-current voltage VCT is applied to the drain electrode 51D of the FET 51.

The direct-current voltage VRE smoothed by the smoothing capacitor 32 is applied to the cathode of the Zener diode 50 via the resistor 45. Consequently, a substantially constant voltage corresponding to a breakdown voltage of the Zener diode 50 is applied to the gate electrode 51G of the FET 51. According to the application of the substantially constant voltage, a substantially constant current flows between a drain and a source of the FET 51. In this way, the FET 51 functions as a constant current element. The FET 51 adjusts an electric current flowing to the first branch path 40.

The capacitor 46 smoothes a pulsating voltage supplied from the source electrode 51S of the FET 51 via the resistor 44 and the rectifying element 43 and converts the pulsating voltage into a direct-current voltage. The regulator 48 generates a substantially constant direct-current driving voltage VDR from the input direct-current voltage and outputs the driving voltage VDR to the control unit 21. The capacitor 47 is used for, for example, removal of noise of the driving voltage VDR. Consequently, the driving voltage VDR is supplied to the control unit 21.

In this case, as explained above, the drain electrode 51D of the FET 51 is connected to the power supply path 25 and the gate electrode 51G of the FET 51 is connected to the high-potential terminal 30c of the rectifying circuit 30. That is, the alternating-current voltage VCT is applied to the drain electrode 51D of the FET 51 and the direct-current voltage VRE is applied to the gate electrode 51G of the FET 51. Consequently, for example, it is possible to stabilize the operation of the FET 51. It is possible to reduce a load applied to the rectifying elements 41 and 42. Further, it is possible to supply the stable driving voltage VDR to the control unit 21. As a result, it is possible to stabilize the operation of the control unit 21. A voltage applied to the drain electrode 51D of the FET 51 only has to be a voltage not smoothed by the smoothing capacitor 32. For example, the voltage may be a pulsating voltage after the rectification by the rectifying circuit 30. A voltage applied to the gate electrode 51G of the FET 51 only has to be a voltage smoothed by the smoothing capacitor 32. For example, the voltage may be the direct-current voltage VDC.

The power supply unit for control 22 further includes a thermosensor 52, a transistor 53, and a resistor 54.

One end of the thermosensor 52 is connected to a base of the transistor 53. The other end of the thermosensor 52 is connected to the ground. For example, the thermosensor 52 is arranged in the vicinity of the FET 51. For example, the thermosensor 52 is mounted in a state in which the thermosensor 52 is in contact with the FET 51. Consequently, the temperature of the thermosensor 52 changes according to heat generation of the FET 51. In this example, the thermosensor 52 has a positive temperature characteristic. That is, the thermosensor 52 increases a resistance value according to a rise in the temperature. As the thermosensor 52, for example, a PTC (Positive Temperature Coefficient) thermistor is used.

A collector of the transistor 53 is connected to the gate electrode 51G of the FET 51, the resistor 45, and the cathode of the Zener diode 50. An emitter of the transistor 53 is connected to the ground. One end of the resistor 54 is connected to one end of the thermosensor 52 and the base of the transistor 53. The other end of the resistor 54 is connected to the high-potential terminal 30c of the rectifying circuit 30.

A voltage corresponding to a voltage division ratio of the thermosensor 52 and the resistor 54 is applied to the base of the transistor 53. The voltage division ratio is set to turn off the transistor 53 in a state in which the temperature of the FET 51 is low (e.g., about room temperature). Consequently, in a state in which the temperature of the FET 51 is lower than an upper limit temperature, as explained above, the voltage corresponding to the breakdown voltage of the Zener diode 50 is applied to the gate electrode 51G of the FET 51 and the driving voltage VDR is supplied to the control unit 21.

If the temperature of the FET 51 rises, the temperature of the thermosensor 52 rises according to the rise in the temperature and the resistance value of the thermosensor 52 increases. If the resistance value of the thermosensor 52 increases, the voltage applied to the base of the transistor 53 rises. If the temperature of the FET 51 rises to temperature equal to or higher than the upper limit temperature, the transistor 53 is switched from an OFF state to an ON state. If the transistor 53 is switched to the ON state, the gate potential of the FET 51 drops. For example, the gate potential of the FET 51 drops to the ground potential. Consequently, an electric current flowing between the drain and the source of the FET 51 is limited.

As explained above, the thermosensor 52 is used to limit, if the temperature of the FET 51 is equal to or higher than the upper limit value, the electric current flowing to the FET 51. In this example, the electric current flowing to the FET 51 is limited by changing the gate potential of the FET 51 and switching the FET 51 from the first state to the second state. More specifically, the electric current flowing between the drain and the source of the FET 51 is limited. Consequently, for example, it is possible to suppress heat generation of the FET 51. For example, a resistance value of some PTC thermistor increases a double or more if the temperature of the PTC thermistor reaches a Curie temperature. Therefore, a PTC thermistor having a Curie temperature close to the upper limit temperature of the FET 51 is selected as the thermosensor 52. Consequently, it is possible to detect heat generation of the FET 51 and suppress the electric current flowing to the FET 51. The upper limit temperature of the FET 51 is, for example, about 140°C to 150°C. In this example, the n-channel FET of the enhancement type is used as the FET 51. The FET 51 may be a p-channel type or may be a depression type. For example, if the FET 51 is the p-channel type, the drain electrode 51D is the first main electrode and the source electrode 51S is the second main electrode. That is, in the case of the p-channel type, the potential of the source electrode 51S is set higher than the potential of the drain electrode 51D. A change in the gate potential of the FET 51 involved in a change of the resistance value of the thermosensor 52 only has to be appropriately set according to a type of the FET 51.

The current adjusting unit 23 includes a resistor 61 and a switching element 62. As the switching element 62, for example, an FET or a GaN-HEMT is used. In the following explanation, the switching element 62 is explained as the FET.

One end of the resistor 61 is connected to the source electrode 51S of the FET 51. The other end of the resistor 61 is connected to a drain of the switching element 62. A gate of the switching element 62 is connected to the control unit 21. The control unit 21 inputs the control signal CGS to the gate of the switching element 62. As the switching element 62, for example, a switching element of a normally off type is used. For example, the control signal CGS input from the control unit 21 is switched from Lo to Hi, whereby the switching element 62 changes from the OFF state to the ON state.

If the switching element 62 is switched to the ON state, for example, a part of an electric current flowing through the power supply path 25 flows to the second branch path 60 via the rectifying elements 41 and 42 and the FET 51. A part of an electric current flowing to the first branch path 40 flows to the second branch path 60. That is, if the switching element 62 is switched to the ON state, the current adjusting unit 23 changes to a conduction state. If the switching element 62 is switched to the OFF state, the current adjusting unit 23 changes to a non-conduction state.

The source of the switching element 62, the anode of the Zener diode 50, the other end of the capacitor 46, the other end of the capacitor 47, the other end of the thermosensor 52, and the emitter of the transistor 53 are connected to the low-potential terminal 30d of the rectifying circuit 30. That is, the ground of the power supply unit for control 22 and the ground of the current adjusting unit 23 are used in common with the ground on the input side of the direct-current voltage converting unit 34. On the other hand, the ground of the control unit 21 is connected to the output terminal 8. That is, the ground of the control unit 21 is used in common with the ground on the output side of the direct-current voltage converting unit 34. Consequently, it is possible to further stabilize the operation of the control unit 21.

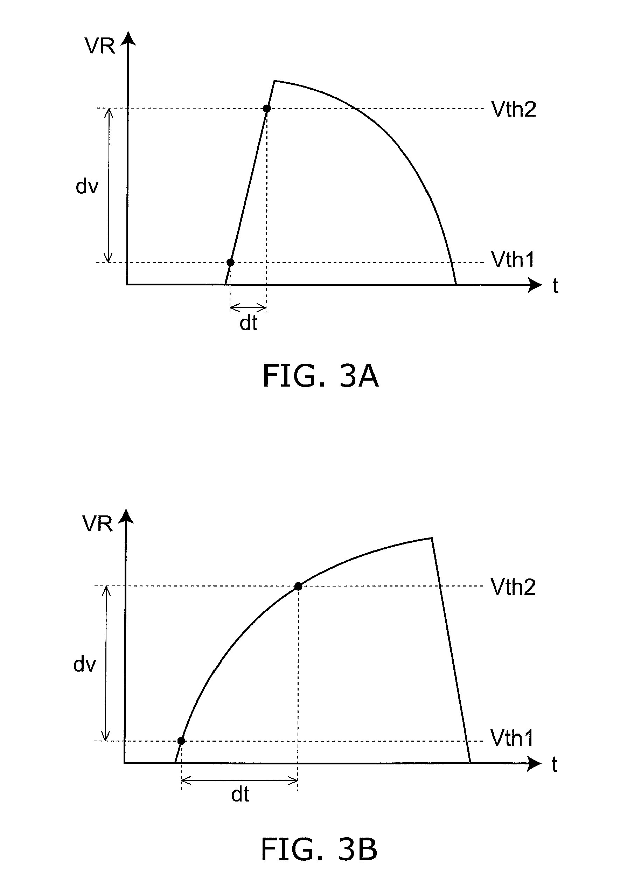

FIGS. 3A and 3B are graphs showing the operation of the control unit according to the first embodiment.

After starting according to the supply of the driving voltage VDR from the power supply unit for control 22, the control unit 21 determines a control system of the dimmer 3 on the basis of the detection voltage VR.

The abscissa of FIGS. 3A and 3B indicates time t and the ordinate of FIGS. 3A and 3B indicates the detection voltage VR.

FIG. 3A shows an example of a waveform of the detection voltage VR input if the alternating-current voltage VCT is supplied from the dimmer 3 of the phase control system.

FIG. 3B shows an example of a waveform of the detection voltage VR input if the alternating current voltage VCT is supplied from the dimmer 3 of the anti-phase control system.

As shown in FIGS. 3A and 3B, the control unit 21 sets a first threshold voltage Vth1 and a second threshold voltage Vth2 with respect to the detection voltage VR. An absolute value of the second threshold voltage Vth2 is larger than an absolute value of the first threshold voltage Vth1. The control unit 21 measures time dt from a point when the detection voltage VR reaches the first threshold voltage Vth1 until the detection voltage VR reaches the second threshold voltage Vth2. The control unit 21 calculates a gradient dV/dt from a difference dV between the first threshold voltage Vth1 and the second threshold voltage Vth2 and the time dt. The control unit 21 determines whether the gradient dV/dt is equal to or larger than a predetermined value. If the gradient dV/dt is equal to or larger than the predetermined value, the control unit 21 determines that the control system is the phase control system. If the gradient dV/dt is smaller than the predetermined value, the control unit 21 determines that the control system is the anti-phase control system. The measurement of the time dt may be performed using, for example, an internal clock or may be performed by providing a timer or the like on the outside.

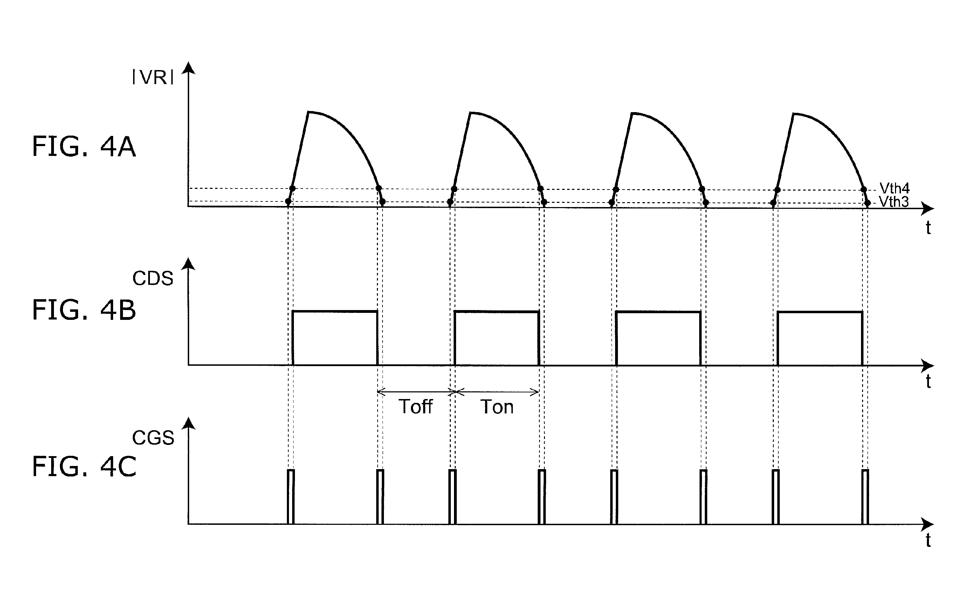

FIGS. 4A to 4C are graphs showing the operation of the control unit according to the first embodiment.

The control unit 21 performs detection of a conduction angle of the alternating-current voltage VCT after performing the determination of the control system of the dimmer 3.

FIGS. 4A to 4C show an operation example performed if it is determined that the control system is the phase control system.

The abscissa of FIGS. 4A to 4C indicates time t. The ordinate of FIG. 4A indicates an absolute value of the detection voltage VR. The ordinate of FIG. 4B indicates a conduction angle detection signal CDS. The ordinate of FIG. 4C indicates the control signal CGS.

As shown in FIGS. 4A to 4C, the control unit 21 sets a third threshold voltage Vth3 (a first voltage) and a fourth threshold voltage Vth4 (a second voltage) with respect to an absolute value of the detection voltage VR. An absolute value of the fourth threshold voltage Vth4 is larger than an absolute value of the third threshold voltage Vth3. The third threshold voltage Vth3 is set, for example, as close as possible to the ground potential without causing a detection error.

The control unit 21 determines whether the absolute value of the detection voltage VR is equal to or larger than the third threshold voltage Vth3 and determines whether the absolute value of the detection voltage VR is equal to or larger than the fourth threshold voltage Vth4. The control unit 21 turns on the switching element 62 by switching the control signal CGS from Lo to Hi in response to the determination that the absolute value of the detection voltage VR is equal to or larger than the third threshold voltage Vth3. The control unit 21 turns off the switching element 62 by switching the control signal CGS from Hi to Lo in response to the determination that the absolute value of the detection voltage VR is equal to or larger than the fourth threshold voltage Vth4. The control unit 21 switches the conduction angle detection signal CDS from Lo to Hi in response to the determination that the absolute value of the detection voltage VR is equal to or larger than the fourth threshold voltage Vth4.

The control unit 21 switches the conduction angle detection signal CDS from Hi to Lo and switches the control signal CGS from Lo to Hi in response to the determination that the absolute value of the detection voltage VR is smaller than the fourth threshold voltage Vth4 after the determination that the absolute value of the detection voltage VR is equal to or larger than the fourth threshold voltage Vth4. The control unit 21 switches the control signal CGS from Hi to Lo in response to the determination that the absolute value of the detection voltage VR is smaller than the third threshold voltage Vth3.

As explained above, if the absolute value of the detection voltage VR is equal to or larger than the fourth threshold voltage Vth4, the control unit 21 sets the conduction angle detection signal CDS to Hi. If the absolute value of the detection voltage VR is smaller than the fourth threshold voltage Vth4, the control unit 21 sets the conduction angle detection signal CDS to Lo.

The control unit 21 determines that a section of time Ton when the conduction angle detection signal CDS is set to Hi is a conduction section of the conduction angle control by the dimmer 3. The control unit 21 determines that a section of time Toff when the conduction angle detection signal CDS is set to Lo is an interruption section of the conduction angle control by the dimmer 3. Consequently, the control unit 21 detects a conduction angle of the alternating-current voltage VCT from a ratio of the time Ton and the time Toff.

After detecting a conduction angle of the alternating-current voltage VCT, the control unit 21 generates the control signal CTL having a duty ratio corresponding to the conduction angle and inputs the generated control signal CTL to the direct-current voltage converting unit 34. Consequently, the illumination light source 16 is dimmed according to the alternating-current voltage VCT, the conduction angle of which is controlled in the phase control system. For example, the control unit 21 periodically carries out the detection of the conduction angle until the supply of the alternating-current voltage VCT is stopped. The detection of the conduction angle may be performed, for example, at every half wave of the alternating-current voltage VCT or may be performed at every predetermined number of half waves.

As explained above, the control unit 21 sets the control signal CGS to Hi (sets the current adjusting unit 23 in the conduction state) if the absolute value of the detection voltage VR is equal to or larger than the third threshold voltage Vth3 (the first voltage) and smaller than the fourth threshold voltage Vth4 (the second voltage). The control unit 21 sets the control signal CGS to Lo (sets the current adjusting unit 23 in the non-conduction state) if the absolute value of the detection voltage VR is smaller than the third threshold voltage Vth3 and if the absolute value of the detection voltage VR is equal to or larger than the fourth threshold voltage Vth4.

For example, it is possible to cause the dimmer 3 to stably operate by controlling the operation of the current adjusting unit 23 in this way. For example, it is possible to draw out charges accumulated in the capacitors 46 and 47 to the current adjusting unit 23. Consequently, it is possible to stably supply the driving voltage VDR to the control unit 21. That is, it is possible to further stabilize the operation of the control unit 21.

For example, it is assumed that a triac is used as the dimmer 3 that performs the conduction angle control in the phase control system and a LED is used as the illumination light source 16. A consumed current of the LED is small compared with a consumed current of an incandescent lamp or the like. Therefore, if the operation explained above is not performed, in some cases, a holding current necessary for turning on the triac cannot be fed at a conduction angle equal to or smaller than a predetermined value and the operation of the dimmer 3 becomes unstable.

On the other hand, in the power supply circuit 14 according to this embodiment, by controlling the operation of the current adjusting unit 23 as explained above, the holding current necessary for turning on the triac can be fed to the current adjusting unit 23 (the second branch path 60) at the conduction angle equal to or smaller than the predetermined value. Consequently, it is possible to stabilize the operation of the dimmer 3.

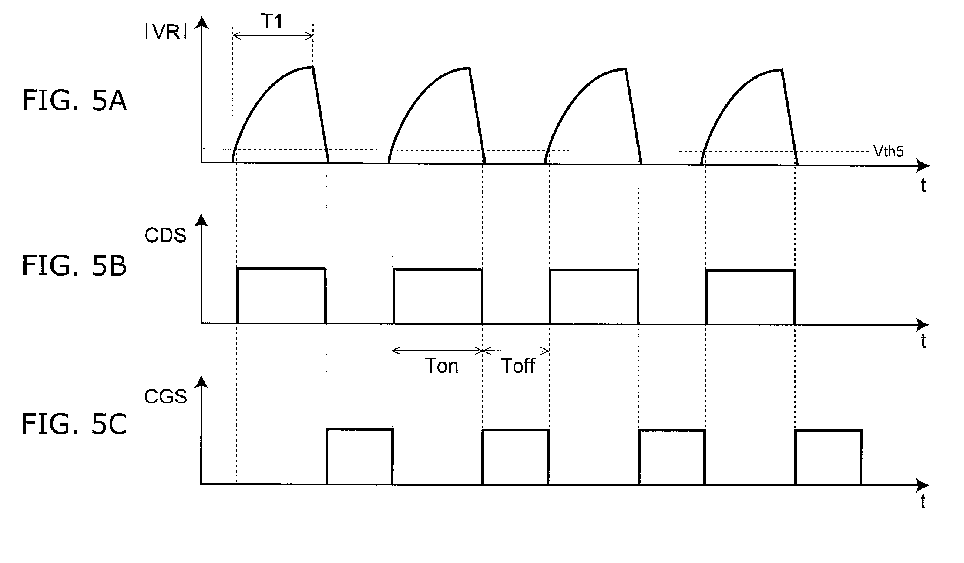

FIGS. 5A to 5C are graphs showing the operation of the control unit according to the first embodiment.

FIGS. 5A to 5C shows an operation example performed if it is determined that the control system is the anti-phase control system.

The abscissa of FIGS. 5A to 5C indicates time t. The ordinate of FIG. 5A indicates an absolute value of the detection voltage VR. The ordinate of FIG. 5B indicates a conduction angle detection signal CDS. The ordinate of FIG. 5C is a control signal CGS.

As shown in FIGS. 5A to 5C, if determining that the control system is the anti-phase control system, the control unit 21 sets a fifth threshold voltage Vth5 with respect to the absolute value of the detection voltage VR. The control unit 21 determines whether or not the absolute value of the detection voltage VR is equal to or larger than the fifth threshold voltage Vth5.

If the absolute value of the detection voltage VR is equal to or larger than the fifth threshold voltage Vth5, the control unit 21 sets the conduction angle detection signal CDS to Hi. If the absolute value of the detection voltage VR is smaller than the fifth threshold voltage Vth5, the control unit 21 sets the conduction angle detection signal CDS to Lo. As in the case of the phase control system, the control unit 21 determines that the section of the time Ton when the conduction angle detection signal CDS is set to Hi is the conduction section of the conduction angle control by the dimmer 3. The control unit 21 determines that the section of the time Toff when the conduction angle detection signal CDS is set to Lo is the interruption section of the conduction angle control by the dimmer 3. Consequently, the control unit 21 detects a conduction angle of the alternating-current voltage VCT from the ratio of the time Ton and the time Toff.

The control unit 21 generates the control signal CTL having a duty ratio corresponding to the detected conduction angle and inputs the control signal CTL to the direct-current voltage converting unit 34. Consequently, in the anti-phase control system, as in the phase control system, it is possible to dim the illumination light source 16 according to the alternating-current voltage VCT.

The control unit 21 turns on the switching element 62 by switching the control signal CGS from Lo to Hi in response to the switching of the conduction angle detection signal CDS from Hi to Lo. The control unit 21 turns off the switching element 62 by switching the control signal CGS from Hi to Lo in response to the switching of the conduction angle detection signal CDS from Lo to Hi involved in the input of the next half wave. That is, the control unit 21 sets the current adjusting unit 23 in the non-conduction state in a conduction section of a detected conduction angle and sets the current adjusting unit 23 in the conduction state in an interruption section of the detected conduction angle.

In the anti-phase control system, in some cases, the time Ton is longer than time T1 of an actual conduction section of the dimmer 3 because of the influence of charges accumulated in the filter capacitor 26. If the time Ton is longer than the time T1, for example, the duty ratio of the control signal CTL changes and a degree of dimming of the illumination light source 16 changes.

It is possible to draw out the charges accumulated in the filter capacitor 26 to the current adjusting unit 23 (the second branch path 60) by feeding a part of an electric current flowing through the power supply path 25 to the second branch path 60. Consequently, it is possible to more surely detect a conduction angle of the anti-phase controlled alternating-current voltage VCT. Therefore, it is possible to more highly accurately perform dimming of the illumination light source 16.

For example, in some cases, a power supply circuit, a load of which is an LED, is used in combination with a phase-control dimmer, a load of which is assumed to be an incandescent lamp. In this case, in order to perform a stable operation of the dimmer, it is necessary to draw a certain degree of an electric current to the power supply circuit side. At this point, a constant current circuit including an FET is suitably used. A threshold is provided with respect to an input voltage to control an electric current flowing to the FET, whereby it is possible to set a necessary current according to the dimmer. It is also possible to supply electric power to the control unit using the circuit.

The circuit system sets a supply current according to a resistor connected to a source of the FET and a gate voltage. Therefore, if a terminal opposite to a source of the connected resistor is connected to the ground, current supply is continued.

When such an abnormal mode occurs, if the electric current excessively flows to the FET, the FET itself short-circuits and fails. Therefore, fail-safe design is maintained. However, if a conduction angle controlled alternating-current voltage is used, since an input voltage is changed, in some cases, the electric current continues to flow and a heat generating state is maintained.

A part of microprocessors has, as a protection against such an abnormal mode, a thermal shutdown function for stopping an operation if temperature reaches a predetermined temperature. However, if it is attempted to stop the operation of the FET 51 using such a function, a circuit configuration is complicated. Since electric power is supplied to the control unit 21 via the FET 51, if the operation of the FET 51 becomes unstable, in some cases, power supply to the control unit 21 is not properly performed and the function of the processor cannot be used.

On the other hand, in the power supply circuit 14 according to this embodiment, the thermosensor 52 is provided in the power supply unit for control 22 to limit an electric current flowing to the FET 51 if the temperature of the FET 51 is equal to or higher than the upper limit temperature. Consequently, for example, even if the capacitor 46 short-circuits and one end of the resistor 44 is connected to the ground or if the switching element 62 short-circuits and one end of the resistor 61 is connected to the ground, it is possible to suppress a situation in which the electric current continues to flow to the FET 51 and the temperature of the FET 51 generates heat to temperature equal to or higher than the upper limit temperature. Since it is unnecessary to use the function of the microprocessor or the like, it is possible to more surely perform heating protection for the FET 51 with a simple configuration.

If the electric current flowing to the FET 51 is limited, the power supply to the control unit 21 is stopped and the operation of the control unit 21 stops. If the operation of the control unit 21 stops, the input of the control signal CTL to the direct-current voltage converting unit 34 is stopped. If the control signal CTL is not input, the direct-current voltage converting unit 34 outputs the direct-current voltage VDC having a minimum value. For example, if the illumination light source 16 is an LED, the direct-current voltage converting unit 34 outputs the direct-current voltage VDC of about 2 V with respect to a driving voltage of about 18 V to 20 V. Therefore, the illumination light source 16 is extinguished. In this way, it is also possible to stably stop the operation of the control unit 21 and the lighting load 12. Therefore, it is possible to suppress an abnormal lighting state such as blinking of the illumination light source 16 from occurring.

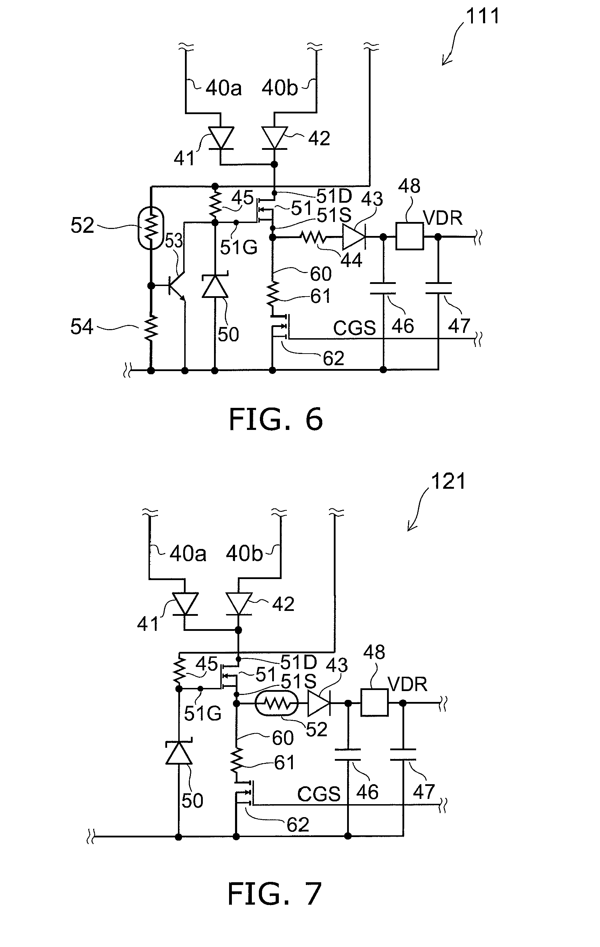

FIG. 6 is a circuit diagram schematically showing another power supply circuit according to the first embodiment.

In FIG. 6, only a power supply unit for control 111 and the current adjusting unit 23 in this example is shown. The components such as the power converting unit 20 and the control unit 21 are substantially the same as the components in the power supply circuit explained above. Therefore, illustration and explanation of the components are omitted. Similarly, in the following explanation, illustration and explanation of the members already explained are omitted.

As shown in FIG. 6, in the power supply unit for control 111, the positions of the thermosensor 52 and the resistor 54 are changed from the positions of the thermosensor 52 and the resistor 54 of the power supply unit for control 22. That is, in this example, one end of the thermosensor 52 is connected to one end of the resistor 54 and the base of the transistor 53. The other end of the thermosensor 52 is connected to the high-potential terminal 30c of the rectifying circuit 30. One end of the resistor 54 is connected to the base of the transistor 53. The other end of the resistor 54 is connected to the ground.

In this example, the thermosensor 52 has a negative temperature characteristic. That is, the thermosensor 52 reduces a resistance value according to a rise in temperature. As the thermosensor 52, for example, an NTC (Negative Temperature Coefficient) thermistor is used.

In the power supply unit for control 111, if the temperature of the FET 51 rises, the temperature of the thermosensor 52 rises according to the rise in the temperature and the resistance value of the thermosensor 52 decreases. If the resistance value of the thermosensor 52 decreases, a voltage applied to the base of the transistor 53 rises. Consequently, as in the case of the power supply unit for control 22, if the temperature of the FET 51 is equal to or higher than the upper limit temperature, it is possible to reduce the gate potential of the FET 51 and limit the electric current flowing to the FET 51.

As explained above, the temperature characteristic of the thermosensor 52 may be either positive or negative. The thermosensor 52 is not limited to a thermistor and may be an arbitrary element that changes a resistance value according to a temperature change.

### Second Embodiment

FIG. 7 is a circuit diagram schematically showing a power supply circuit according to a second embodiment.

As shown in FIG. 7, in the power supply unit for control 121, the transistor 53 and the resistor 54 are omitted and the thermosensor 52 is used instead of the resistor 44. That is, in this example, one end of the thermosensor 52 is connected to the source electrode 51S of the FET 51 and the other end of the thermosensor 52 is connected to the anode of the rectifying element 43. In this example, the thermosensor 52 is electrically connected between the source electrode 51S of the FET 51 and the ground.

In this example, the thermosensor 52 has a positive temperature characteristic. As the thermosensor 52, for example, a PTC thermistor is used.

In the FET 51, a constant current value is determined by a gate potential or a source potential. When a threshold voltage of the FET 51 is represented as Vt, a gate potential of the FET 51 is represented as Vg, and a source potential of the FET 51 is represented as Vs, a current is supplied between the drain and the source to keep a relation Vt=Vg-Vs. On the other hand, a source potential is determined by an impedance component between the source and the ground. When an electric current between the drain and the source is represented as Id and an impedance component between the source and the ground is represented as Z, the source potential is, for example, Vs=Id×Z. That is, since Id=(Vg-Vt)/Z, in order to reduce Id, it is possible to adopt means for reducing Vg or increasing Z.

In the power supply unit for control 121, if the temperature of the FET 51 rises, the temperature of the thermosensor 52 rises according to the rise in the temperature and the resistance value of the thermosensor 52 increases. The thermosensor 52 increases a resistance value between the source electrode 51S and the ground more if the temperature is equal to or higher than the upper limit temperature than if the temperature is lower than the upper limit temperature. That is, the thermosensor 52 increases the Z. Consequently, in the power supply unit for control 121, as in the power supply unit for control 22, if the temperature of the FET 51 is equal to or higher than the upper limit temperature, it is possible to limit the electric current flowing to the FET 51. Further, it is possible to suppress the heat generation of the FET 51. In this example, the FET 51 is an n-channel FET. For example, if a p-channel FET is used, the drain electrode 51D and the source electrode 51S of the FET 51 only have to be interchanged. That is, the thermosensor 52 only has to be electrically connected between the drain electrode 51S of the FET 51 and the ground.

In the configuration of the power supply unit for control 121, a temperature fuse may be used as the thermosensor 52. For example, a fusing temperature of the temperature fuse is set to the upper limit value of the FET 51. If the temperature of the FET 51 is equal to or higher than the upper limit temperature, the temperature fuse is fused. Consequently, it is possible to more surely limit an electric current flowing to the FET 51. That is, in this specification, an "increase in resistance" includes a state in which the thermosensor 52 is substantially insulated (the resistance value is infinite).

In the configuration of the power supply unit for control 121, the thermosensor 52 may be a fuse resistor. For example, a rated current for fusing the fuse resistor is set to a value of an electric current that flows to the FET 51 if the temperature of the FET 51 is equal to or higher than the upper limit temperature. If the temperature of the FET 51 is equal to or higher than the upper limit temperature, the fuse resistor is fused by the electric current. Consequently, as in the case of the temperature fuse, it is possible to more surely limit the electric current flowing to the FET 51. In this way, the thermosensor 52 may be an element that directly reacts to the temperature of the FET 51 or may be an element that indirectly reacts to the temperature of the FET 51 via the electric current or the like. If the fuse resistor or the like is used as the thermosensor 52, the thermosensor 52 does not always have to be arranged in the vicinity of the FET 51.

On the other hand, if a PTC thermistor or the like is used as the thermosensor 52, a circuit of a self-reset type that releases limitation on an electric current if the temperature of the FET 51 drops from temperature equal to or higher than an upper limit value to temperature lower than the upper limit value.

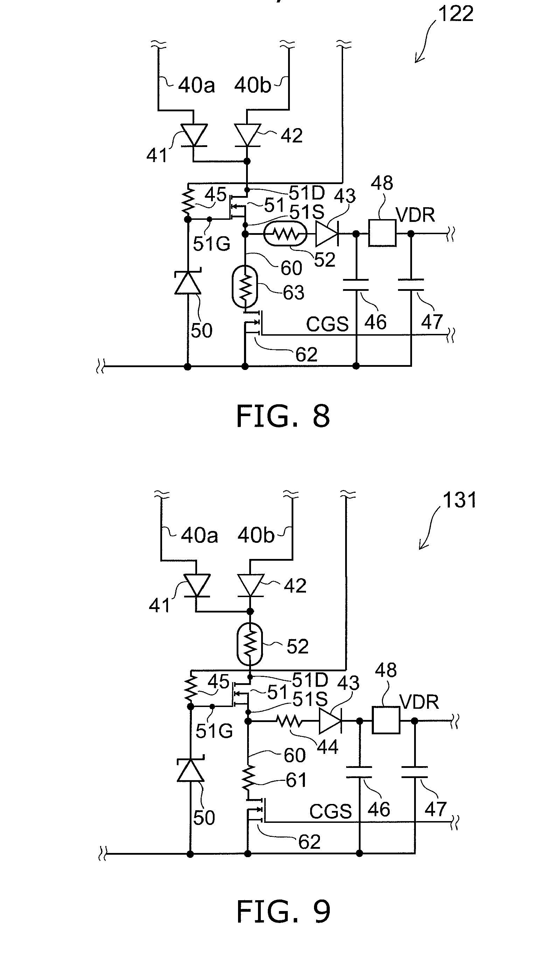

FIG. 8 is a circuit diagram schematically showing another power supply circuit according to the second embodiment.

As shown in FIG. 8, in a power supply unit for control 122, a thermosensor 63 is provided in the current adjusting unit instead of the resistor 61. As the thermosensor 63, for example, any one of an element, a temperature fuse, and a fuse resistor having a positive temperature characteristic is used. Consequently, it is possible to appropriately suppress heat generation of the FET 51 involved in a short circuit of the switching element 62.

### Third Embodiment

FIG. 9 is a circuit diagram schematically showing a power supply circuit according to a third embodiment.

As shown in FIG. 9, in a power supply unit for control 131, the transistor 53 and the resistor 54 of the power supply unit for control 22 in the first embodiment are omitted. In the power supply unit for control 131, the thermosensor 52 is electrically connected between the first branch path 40 and the drain electrode 51D of the FET 51. One end of the thermosensor 52 is connected to the cathode of the rectifying element 41 and the cathode of the rectifying element 42. The other end of the thermosensor 52 is connected to the drain electrode 51D of the FET 51.

In this example, as the thermosensor 52, for example, any one of an element, a temperature fuse, and a fuse resistor having a positive temperature characteristic is used.

In the power supply unit for control 131, if the temperature of the FET 51 rises, the temperature of the thermosensor 52 rises according to the rise in the temperature and the resistance value of the thermosensor 52 increases. The thermosensor 52 increases a resistance value between the first branch path 40 and the drain electrode 51D of the FET 51 more if the temperature is equal to or higher than the upper limit temperature than if the temperature is lower than the upper limit temperature. Consequently, in the power supply unit for control 131, as in the power supply unit for controls 22 and 121, if the temperature of the FET 51 is equal to or higher than the upper limit temperature, it is possible to limit the electric current flowing to the FET 51. Further, it is possible to suppress the heat generation of the FET 51. In this example, the FET 51 is an n-channel FET. For example, if a p-channel FET is used, the drain electrode 51D and the source electrode 51S only have to be interchanged. That is, the thermosensor 52 only has to be electrically connected between the first branch path 40 and the source electrode 51S of the FET 51.

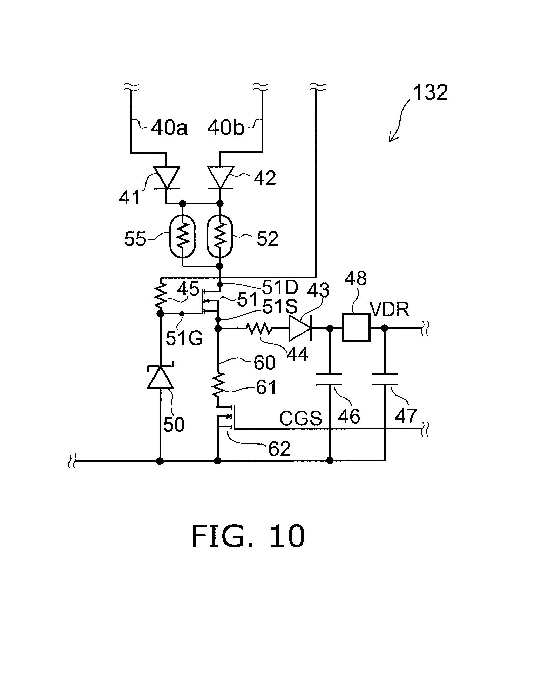

FIG. 10 is a circuit diagram schematically showing another power supply circuit according to the third embodiment.

As shown in FIG. 10, in a power supply unit for control 132, a thermosensor 55 is provided in addition to the components of the power supply unit for control 131. The thermosensor 55 is connected to the thermosensor 52 in parallel. Consequently, it is possible to suppress fluctuation in characters of elements and more appropriately perform detection of the temperature of the FET 51 and limitation of an electric current. The number of thermosensors connected in parallel is not limited to two and may be three or more. In the configuration of the power supply unit for control 22 and the power supply unit for control 121, a plurality of thermosensors may be connected in parallel.

The embodiments are explained above with reference to the specific examples. However, the present invention is not limited to the embodiments. Various modifications of the embodiments are possible.

For example, in the embodiments, the lighting load 12 is explained as the load. However, the load is not limited to this and may be an arbitrary load for which conduction angle control is necessary such as a heater. In the embodiments, the power supply circuit 14 used for the luminaire 10 is explained as the power supply circuit. However, the power supply circuit is not limited to this. The power supply circuit may be an arbitrary power supply circuit corresponding to a load for which conduction angle control is necessary. The voltage to be converted by the power converting unit 20 is not limited to a direct-current voltage and may be, for example, an alternating current value having different effective values or may be a pulsating voltage. The voltage to be converted by the power converting unit 20 only has to be set according to, for example, a load connected to the power converting unit 20.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

## Claims

1. A power supply circuit (14) comprising:
a power converting unit (20) configured to convert a conduction angle controlled alternating-current voltage supplied via a power supply path (25) and supply a direct-current voltage to a load (12);
a control unit (21) configured to detect a conduction angle of the alternating-current voltage and control the conversion of the voltage by the power converting unit (20) according to the detected conduction angle; and
a power supply unit for control (22, 111, 121, 122, 131, and 132) including a first branch path (40) electrically connected to the power supply path (25), a semiconductor element (51) configured to adjust an electric current flowing to the first branch path (40), a thermosensor (52, 55) configured to limit, if temperature of the semiconductor element (51) is equal to or higher than an upper limit temperature, an electric current flowing to the semiconductor element (51), the power supply unit for control (22, 111, 121, 122, 131, 132) converting the alternating-current voltage input via the first branch path (40) and supplying a direct-current voltage to the control unit (21).

2. The circuit (14) according to claim 1, wherein the semiconductor element (51) includes:
a first main electrode (51S);
a second main electrode (51D) set to potential higher than potential of the first main electrode (51S); and
a control electrode (51G) for switching a first state in which an electric current flows between the first main electrode (51S) and the second main electrode (51D) and a second state in which the electric current flowing between the first main electrode (51S) and the second main electrode (51D) is smaller than the electric current in the first state, and
the thermosensor (52) changes potential of the control electrode (51G) when the temperature is equal to or higher than the upper limit temperature to switch the semiconductor element (51) from the first state to the second state.

3. The circuit (14) according to claim 1, wherein the semiconductor element (51) includes:
a first main electrode (51S);
a second main electrode (51D) set to potential higher than potential of the first main electrode (51S); and
a control electrode (51G) for switching a first state in which an electric current flows between the first main electrode (51S) and the second main electrode (51D) and a second state in which the electric current flowing between the first main electrode (51S) and the second main electrode (51D) is smaller than the electric current in the first state, and
the thermosensor (52) is electrically connected between the first main electrode (51S) and a ground and increases a resistance value between the first main electrode (51S) and the ground more if the temperature is equal to or higher than the upper limit temperature than if the temperature is lower than the upper limit temperature.

4. The circuit (14) according to claim 1, wherein the semiconductor element (51) includes:
a first main electrode (51S);
a second main electrode (51D) set to potential higher than potential of the first main electrode (51S); and
a control electrode (51G) for switching a first state in which an electric current flows between the first main electrode (51S) and the second main electrode (51D) and a second state in which the electric current flowing between the first main electrode (51S) and the second main electrode (51D) is smaller than the electric current in the first state, and
the thermosensor (52, 55) is electrically connected between the first branch path (40) and the second main electrode (51D) and increases a resistance value between the first branch path (40) and the second main electrode (51D) more if the temperature is equal to or higher than the upper limit temperature than if the temperature is lower than the upper limit temperature.

5. The circuit (14) according to claim 4, wherein
a plurality of the thermosensors (52, 55) are provided, and
the plurality of thermosensors (52, 55) are connected in parallel between the first branch path (40) and the second main electrode (51D).

6. The circuit (14) according to any one of claims 2 to 5, further comprising a current adjusting unit (23) including a second branch path (60) electrically connected to the first main electrode (51S), the current adjusting unit (23) being capable of switching a conduction state in which a part of an electric current flowing to the first branch path (40) is fed to the second branch path (60) and a non-conduction state in which the electric current is not fed to the second branch path (60).

7. The circuit (14) according to claim 6, wherein
a detection voltage for detecting an absolute value of the alternating-current voltage is input to the control unit (21), and
the control unit (21) determines whether conduction angle control by the alternating-current voltage is a phase control system and, if determining that the conduction angle control is the phase control system, controls the current adjusting unit (23) on the basis of a first voltage and a second voltage larger than the first voltage, if an absolute value of the detection voltage is equal to or higher than the first voltage and smaller than the second voltage, sets the current adjusting unit (23) in the conduction state, and, if the absolute value of the detection voltage is lower than the first voltage and if the absolute value of the detection voltage is equal to or higher than the second voltage, sets the current adjusting unit (23) in the non-conduction state.

8. The circuit (14) according to claim 6 or 7, wherein the control unit (21) determines whether conduction angle control by the alternating-current voltage is an anti-phase control system and, if determining that the conduction angle control is the anti-phase control system, sets the current adjusting unit (23) in the non-conduction state in a conduction section of the detected conduction angle and sets the current adjusting unit (23) in the conduction state in an interruption section of the detected conduction angle.

9. The circuit (14) according to any one of claims 2 to 8, wherein
the power converting unit (20) includes a rectifying circuit (30) configured to rectify the alternating-current voltage, a smoothing capacitor (32) configured to smooth a rectified voltage and converts the rectified voltage into a first direct-current voltage, and a direct-current voltage converting unit (34) configured to convert the first direct-current voltage into a second direct-current voltage having a different voltage value,
a voltage not smoothed by the smoothing capacitor (32) is applied to the second main electrode (51D), and
a voltage smoothed by the smoothing capacitor (32) is applied to the control electrode (51G).

10. The circuit (14) according to claim 9, wherein a ground of the power supply unit for control (22, 111, 121, 122, 131, 132) is used in common with a ground on an input side of the direct-current voltage converting unit (34), and
a ground of the control unit (21) is used in common with a ground on an output side of the direct-current voltage converting unit (34).

11. The circuit (14) according to any one of claims 1 to 10, wherein the thermosensor (52, 55) is a PTC thermistor.

12. The circuit (14) according to any one of claims 1 to 10, wherein the thermosensor (52, 55) is a temperature fuse.

13. The circuit (14) according to any one of claims 1 to 10, wherein the thermosensor (52, 55) is a fuse resistor.

14. The circuit (14) according to any one of claims 1 to 13, wherein
the load (12) is a lighting load including an illumination light source (16),
the alternating-current voltage is supplied from a dimmer (3), and
the control unit (21) controls the power converting unit (20) according to the detected conduction angle to thereby dim the illumination light source (16) in synchronization with conduction angle control by the dimmer (3).

15. A luminaire (10) comprising:
a lighting load (12) including an illumination light source (16); and
a power supply circuit (14) including:
a power converting unit (20) configured to convert a conduction angle controlled alternating-current voltage supplied via a power supply path (25) and supply a direct-current voltage to the lighting load (12);
a control unit (21) configured to detect a conduction angle of the alternating-current voltage and control the conversion of the voltage by the power converting unit (20) according to the detected conduction angle;
a power supply unit for control (22) including a first branch path (40) electrically connected to the power supply path (25), a semiconductor element (51) configured to adjust an electric current flowing to the first branch path (40), and a thermosensor (52, 55) configured to limit, if temperature of the semiconductor element (51) is equal to or higher than an upper limit temperature, an electric current flowing to the semiconductor element (51), the power supply unit for control (22) converting the alternating-current voltage input via the first branch path (40) and supplying a direct-current voltage to the control unit (21).
